# EUROPÄISCHE PATENTANMELDUNG

(11) **EP 3 812 728 A1**
(43) Veröffentlichungstag der Anmeldung: **28.04.2021**
(21) Anmeldenummer: 19204476.6
(22) Anmeldetag: 22.10.2019
(51) Int. Cl.: G01L 3/10, G01L 25/00

(54) **MAGNETOSTRIKTIVE DREHMOMENTMESSUNG MIT ÜBERLASTTOLERANZ**

(71) Anmelder: NCTE AG, 82041 Oberhaching (DE)
(72) Erfinder: Die Erfindernennung liegt noch nicht vor
(74) Vertreter: Grünecker Patent- und Rechtsanwälte PartG mbB

(57) **Zusammenfassung**

Der erfindungsgemäße magnetostriktive Drehmomentsensor 100 umfasst eine Welle 10 mit einem magnetisierten Bereich 20; einen Magnetfeldsensor 30 zur Messung eines durch den magnetisierten Bereich erzeugten Magnetfelds außerhalb der Welle 10; und eine Auswerteeinheit 40 zur Ermittlung eines Messwerts eines an der Welle 10 anliegenden Drehmoments aufgrund eines Signals des Magnetfeldsensors 30, wobei die Auswerteeinheit 40 einen Speicher 45 zur Speicherung von vorbestimmten Kalibrierungsdaten für eine funktionale Abbildung des Signals des Magnetfeldsensors 30 auf den ermittelten Messwert des Drehmoments umfasst. Die vorbestimmten Kalibrierungsdaten sind sowohl bis zu einem vorbestimmten Nenndrehmoment des Drehmomentsensors 100 als auch in einem Bereich über das Nenndrehmoment hinaus zur Ermittlung des Messwerts des an der Welle 10 anliegenden Drehmoments geeignet.

Das erfindungsgemäße Verfahren dient zum Kalibrieren eines magnetostriktiven Drehmomentsensors und umfasst die folgenden Schritte: Erfassen einer Vielzahl von Datenpaaren aus jeweils einem Signal des Magnetfeldsensors und einem zugehörigen vorbestimmten an der Welle anliegenden Drehmoment; Bestimmen einer funktionalen Abbildung des Signals des Magnetfeldsensors auf einen auszugebenden Drehmomentmesswert des Drehmomentsensors aus der Vielzahl der Datenpaare; und Speichern von Kalibrierungsdaten für die funktionale Abbildung. Vor dem Erfassen der Vielzahl von Datenpaaren wird der folgende Schritt durchgeführt: Anlegen eines über das Nenndrehmoment hinausgehenden Drehmoments an die Welle in eine erste Drehmomentrichtung.

## Beschreibung

### Gebiet der Erfindung

Die Erfindung betrifft ein Verfahren, um einen Kalibierprozess für einen magnetostriktiven Drehmomentsensor durchzuführen. Weiterhin betrifft die Erfindung einen magnetostriktiven Drehmomentsensor.

### Stand der Technik

Im Stand der Technik sind Drehmomentsensoren bekannt, die auf dem Prinzip der (inversen) Magnetostriktion beruhen. Unter Magnetostriktion wird eine elastische Deformation eines ferromagnetischen Materials aufgrund eines angelegten Magnetfeldes verstanden. Entsprechend dazu wird durch eine Deformation eines magnetisierten Material eine Magnetfeldänderung hervorgerufen. Das kann beispielsweise bei einer lokal in Umfangsrichtung magnetisierten Welle dazu eingesetzt werden, eine Torsion der Welle aufgrund eines anliegenden Drehmoments zu erfassen, indem ein Magnetfeldsensor die Änderung der lokalen Magnetisierung außerhalb der Welle erfasst. Die gemessene Magnetfeldänderung kann dazu mit dem anliegenden Drehmoment, das die Torsion bewirkt, verknüpft werden. Auf diese Weise wird ein magnetostriktiver Drehmomentsensor gebildet.

Bei der Fertigung solcher magnetostriktiver Drehmomentsensoren werden diese kalibriert, um eine lineare Zuordnung der gemessenen Magnetfeldänderung mit dem Wert des an der Welle anliegenden Drehmoments (also mittels einer Geraden in einem Drehmoment-Magnetfeld-Diagramm) bereitzustellen. Der aktuelle Stand der Technik beim Justage- und Kalibrierprozess ist die direkte Kalibrierung auf das Nenndrehmoment. Dabei wird für die Gerade ein Achsenschnittpunkt (Offset des Drehmoments) bei einem gemessenen Magnetfeld von Null sowie zusätzlich eine Steigung der Geraden bestimmt. Dazu werden in eine Richtung vorbestimmte Drehmomente bis zu einem Nenndrehmoment angelegt und die jeweiligen geänderten Magnetfeldstärken erfasst.

Das Sensorsystem wird also auf das festgelegte positive Nenndrehmoment (und in eine Richtung) justiert und anschließend kalibriert. Es wird dabei nicht unterschieden, bei welcher Drehrichtung der Drehmomentsensor danach tatsächlich eingesetzt wird.

Aufgrund der mechanischen Anforderungen eines Messsystems mit einem solchen Drehmomentsensor kann es jedoch zu Sensitivitätsabweichungen kommen, wenn beispielsweise aufgrund einer Fehlfunktion einer Anlage mit einem solchen Messsystems eine Überlast oberhalb des Nenndrehmoments angelegt wird oder wenn sich eine Belastung des Primärsensors mit einem negativen Drehmoment einstellt, welches höher ist als die bei der Kalibrierung abgefahrene Drehmomentspanne, und sich dadurch ähnlich einer Überlast die Sensitivität des Sensors verändert. Diese Überlast wirkt sich nachteilig auf die Sensorgenauigkeit aus.

### Beschreibung der Erfindung

Der Erfindung liegt die Aufgabe zugrunde, die genannten Nachteile zumindest teilweise auszuräumen.

Diese Aufgabe wird durch einen magnetostriktiven Drehmomentsensor nach Anspruch 1 gelöst.

Der erfindungsgemäße magnetostriktive Drehmomentsensor umfasst eine Welle mit einem magnetisierten Bereich; einen Magnetfeldsensor zur Messung eines durch den magnetisierten Bereich erzeugten Magnetfelds außerhalb der Welle; und eine Auswerteeinheit zur Ermittlung eines Messwerts eines an der Welle anliegenden Drehmoments aufgrund eines Signals des Magnetfeldsensors, wobei die Auswerteeinheit einen Speicher zur Speicherung von vorbestimmten Kalibrierungsdaten für eine funktionale Abbildung des Signals des Magnetfeldsensors auf den ermittelten Messwert des Drehmoments umfasst. Der erfindungsgemäße magnetostriktive Drehmomentsensor ist dadurch gekennzeichnet, dass die vorbestimmten Kalibrierungsdaten sowohl bis zu einem vorbestimmten Nenndrehmoment des Drehmomentsensors als auch in einem Bereich über das Nenndrehmoment hinaus zur Ermittlung des Messwerts des an der Welle anliegenden Drehmoments geeignet sind.

Wenn der erfindungsgemäße magnetostriktive Drehmomentsensor in einem gewissen Bereich über das Nenndrehmoment hinaus belastet wird, bleibt die Kalibrierung erhalten (Überlasttoleranz). Dem Drehmomentsensor ist der gewisse Bereich über das Nenndrehmoment hinaus bereits inhärent vertraut und eine Überlast führt nicht zu einem Verstimmen der Kalibrierung. Diese kennzeichnende Eigenschaft kann durch Anlegen eine Überlast in dem gewissen Bereich (Überlasttoleranzbereich) getestet werden. Dieser Überlasttoleranzbereich wird durch eine einmalige Vorbehandlung bei der Herstellung und Kalibrierung des Drehmomentsensor bereitgestellt und kann als eine Eigenschaft des Drehmomentsensors angegeben werden.

Die funktionale Abbildung kann eine lineare Funktion sein. Weiterhin kann die lineare Funktion durch zwei vorbestimmte Konstanten definiert und diese zwei Konstanten im Speicher gespeichert sein. Diese zwei vorbestimmten Konstanten können beispielsweise die Steigung und der Achsenabschnitt der linearen Funktion (Geraden) in einem kartesischen Koordinatensystem sein.

Der erfindungsgemäße magnetostriktive Drehmomentsensor kann dahingehend weitergebildet werden, dass eine relative Abweichung des ermittelten Messwerts des anliegenden Drehmoments von dem tatsächlich anliegenden Drehmoment nicht größer als 0,01, vorzugsweise nicht größer als 0,003, höchst vorzugsweise nicht größer als 0,001 ist.

Eine andere Weiterbildung besteht darin, dass der Bereich über das Nenndrehmoment hinaus bis zum 1,25-fachen, vorzugsweise 1,5-fachen, höchst vorzugsweise bis zum 2-fachen des Nenndrehmoments reichen kann.

Gemäß einer anderen Weiterbildung können die vorbestimmten Kalibrierungsdaten sowohl für eine vorbestimmte Richtung des anliegenden Drehmoments als auch für eine dazu entgegengesetzte Richtung des anliegenden Drehmoments geeignet sein. Auf diese Weise ist eine Überlasttoleranz in beide Richtungen gegeben. Dies kann durch eine jeweilige einmalige Überlastvorbehandlung in beide Drehmomentrichtungen erzielt werden.

Die Erfindung stellt ebenfalls ein Verfahren zum Kalibrieren eines magnetostriktiven Drehmomentsensors gemäß Anspruch 7 bereit.

Das erfindungsgemäße Verfahren dient zum Kalibrieren eines magnetostriktiven Drehmomentsensors, wobei der magnetostriktive Drehmomentsensor zur Messung von Drehmomenten bis zu einem vorbestimmten Nenndrehmoment ausgelegt ist, und wobei der magnetostriktive Drehmomentsensor eine Welle mit einem magnetisierten Bereich, einen Magnetfeldsensor zur Messung eines durch den magnetisierten Bereich erzeugten Magnetfelds außerhalb der Welle und eine Auswerteeinheit zur Ermittlung eines Messwerts eines an der Welle anliegenden Drehmoments aufgrund eines Signals des Magnetfeldsensors umfasst. Das erfindungsgemäße Verfahren umfasst die folgenden Schritte: Erfassen einer Vielzahl von Datenpaaren aus jeweils einem Signal des Magnetfeldsensors und einem zugehörigen vorbestimmten an der Welle anliegenden Drehmoment; Bestimmen einer funktionalen Abbildung des Signals des Magnetfeldsensors auf einen auszugebenden Drehmomentmesswert des Drehmomentsensors aus der Vielzahl der Datenpaare; und Speichern von Kalibrierungsdaten für die funktionale Abbildung. Das erfindungsgemäße Verfahren ist dadurch gekennzeichnet, dass vor dem Erfassen der Vielzahl von Datenpaaren der folgende Schritt durchgeführt wird: Anlegen eines über das Nenndrehmoment hinausgehenden Drehmoments an die Welle in eine erste Drehmomentrichtung.

Das Anlegen eines über das Nenndrehmoment hinausgehenden Drehmoments an die Welle kann sowohl in der ersten Drehmomentrichtung als auch in eine zweite Drehmomentrichtung erfolgen, wobei die zweite Drehmomentrichtung entgegengesetzt zur ersten Drehmomentrichtung ist.

Das erfindungsgemäße Verfahren kann dahingehend weitergebildet werden, dass die Vielzahl der Datenpaare nur in der ersten Drehmomentrichtung erfasst werden.

Eine andere Weiterbildung besteht darin, dass die Vielzahl der Datenpaare nur Datenpaare umfasst, bei denen das vorbestimmte angelegte Drehmoment in einem Bereich bis zu dem Nenndrehmoment liegt.

Alternativ dazu kann die Vielzahl der Datenpaare wenigstens ein erstes Datenpaar umfassen, bei dem das vorbestimmte angelegte Drehmoment in einem Bereich bis zu dem Nenndrehmoment liegt, und weiterhin wenigstens ein zweites Datenpaar umfassen, bei dem das vorbestimmte angelegte Drehmoment in einem Bereich über dem Nenndrehmoment liegt.

Gemäß einer anderen Weiterbildung kann ein weiterer Schritt des Speicherns der Kalibrierungsdaten in einem Speicher der Auswerteeinheit vorgesehen sein.

Die funktionale Abbildung kann eine lineare Abbildung des Signals des Magnetfeldsensors auf den auszugebenden Drehmomentmesswert des Drehmomentsensors sein. Weiterhin kann das Bestimmen der funktionalen Abbildung ein Bestimmen einer Regressionsgeraden durch die Vielzahl der Datenpaare umfassen.

Nach einer anderen Weiterbildung kann das über das Nenndrehmoment hinausgehende Drehmoment in einem Bereich des 1,25-fachen, vorzugsweise des 1,25- bis 1,5-fachen, höchst vorzugsweise des 1,5- bis 2-fachen des Nenndrehmoments liegen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

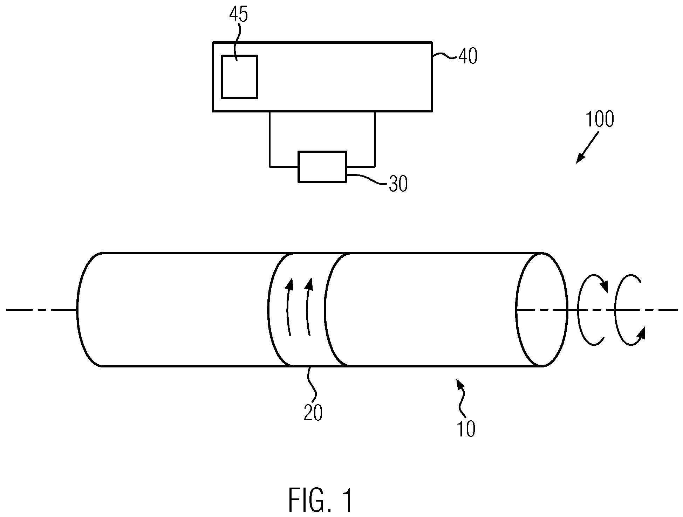

- Fig. 1: zeigt eine Ausführungsform des erfindungsgemäßen Drehmomentsensors.

### Ausführungsformen

Für die Drehmomentmessung mit hohen Überlasten oder Wechsellasten kann das Funktionsprinzip der magnetostriktiven Drehmomentmessung angewendet werden. Hierbei wird das Drehmoment über die Veränderung des auf der Messwelle aufgebrachten Magnetfeldes gemessen. Die Ausprägung des Magnetfeldes unter Drehmoment verhält sich dabei proportional zur anliegenden Kraft.

Die vorliegende Erfindung betrifft den Justage- und Kalibrierprozess, um den Sensor nachfolgend bei positiver und negativer Drehmomentrichtung einsetzen zu können. Dafür wird die Messwelle mit einer beidseitigen Überlast (positive Drehmomentrichtung und negative Drehmomentrichtung) belastet. Die vorbelastete Welle wird anschließend dem Justage- und Kalibrierprozess unterzogen. Die hinterlegte Sensitivität als auch der hinterlegte Offset des Sensorsystems kann für beide Drehmomentrichtungen eingesetzt werden.

Des Weiteren kann das Sensorsystem bis zur definierten Überlast (größer als das Nenndrehmoment) ohne Performanceverlust und Rekalibrierung eingesetzt werden.

Die Erfindung soll der Abweichung einer einseitigen Justage und Kalibrierung entgegenwirken, indem die Welle zuvor mit einer beidseitigen Vorbelastung beansprucht wird. Dadurch ist die Einsetzbarkeit des Sensors von der Lastrichtung unabhängig.

Die Sensoren können dadurch für beidseitige Wechsellasten verwendet werden und erfordern keine erweiterte Kalibriermaßnahme, die nachfolgend zu einem Mehraufwand in der Sensorlagerung und bei der Ausrüstung mit Drehmomentsensoren führen würde.

Die Erfindung zielt darauf ab, den Primärsensor (magnetisierte Welle) mit einer definierten Vorbelastung zu beanspruchen. Diese Maßnahme ist darauf ausgerichtet den Primärsensor vorab mit dem ganzen Drehmomentbereich (Betrag aus positivem und negativem Drehmoment) inklusive eines definierten Überlastbereiches "vertraut" zu machen. Der Primärsensor "merkt" sich die abgefahrene Drehmomentspanne auch wenn im späteren Kalibrierprozess nur in positiver Drehmomentrichtung kalibriert wird.

Figur 1 zeigt eine Ausführungsform des erfindungsgemäßen Drehmomentsensors.

Der erfindungsgemäße magnetostriktive Drehmomentsensor 100 umfasst eine Welle 10 mit einem magnetisierten Bereich 20; einen Magnetfeldsensor 30 zur Messung eines durch den magnetisierten Bereich erzeugten Magnetfelds außerhalb der Welle 10; und eine Auswerteeinheit 40 zur Ermittlung eines Messwerts eines an der Welle 10 anliegenden Drehmoments aufgrund eines Signals des Magnetfeldsensors 30, wobei die Auswerteeinheit 40 einen Speicher 45 zur Speicherung von vorbestimmten Kalibrierungsdaten für eine funktionale Abbildung des Signals des Magnetfeldsensors 30 auf den ermittelten Messwert des Drehmoments umfasst. Der erfindungsgemäße magnetostriktive Drehmomentsensor 100 ist dadurch gekennzeichnet, dass die vorbestimmten Kalibrierungsdaten sowohl bis zu einem vorbestimmten Nenndrehmoment des Drehmomentsensors 100 als auch in einem Bereich über das Nenndrehmoment hinaus zur Ermittlung des Messwerts des an der Welle 10 anliegenden Drehmoments geeignet sind. In dieser Ausführungsform ist die funktionale Abbildung des Signals des Magnetfeldsensors 30 auf den ermittelten Messwert des Drehmoments eine lineare Funktion. Diese lineare Funktion kann durch zwei vorbestimmte Konstanten definiert sein, und diese zwei Konstanten können im Speicher 45 gespeichert sein.

Diese zwei vorbestimmten Konstanten können beispielsweise die Steigung und der Achsenabschnitt der linearen Funktion in Form einer Geraden in einem kartesischen Koordinatensystem sein. Die Steigung gibt dabei die Änderung des gemessenen Drehmoments (ermittelter Messwert des Drehmoments) mit Änderung des Messsignals an, und der Achsenabschnitt entspricht dem Signal des Magnetfeldsensors dem eine Drehmoment von Null zugeordnet wird.

Der erfindungsgemäße magnetostriktive Drehmomentsensor 100 ist gemäß dieser Ausführungsform so ausgebildet, dass eine relative Abweichung des ermittelten Messwerts des anliegenden Drehmoments von dem tatsächlich anliegenden Drehmoment nicht größer als 0,01, vorzugsweise nicht größer als 0,003, höchst vorzugsweise nicht größer als 0,001 ist. Weiterhin reicht der Bereich über das Nenndrehmoment hinaus bis zum 1,25-fachen, vorzugsweise bis zum 1,5-fachen, höchst vorzugsweise bis zum 2-fachen des Nenndrehmoments. Zudem sind in dieser Ausführungsform die vorbestimmten Kalibrierungsdaten sowohl für eine vorbestimmte Richtung des anliegenden Drehmoments als auch für eine dazu entgegengesetzte Richtung des anliegenden Drehmoments geeignet.

Das erfindungsgemäße Verfahren dient zum Kalibrieren des magnetostriktiven Drehmomentsensors 100 und wird vor einer bestimmungsgemäßen Verwendung des Drehmomentsensors 100 durchgeführt. Das Verfahren umfasst die folgenden Schritte: Erfassen einer Vielzahl von Datenpaaren aus jeweils einem Signal des Magnetfeldsensors 30 und einem zugehörigen vorbestimmten an der Welle 10 anliegenden Drehmoment; Bestimmen der funktionalen Abbildung des Signals des Magnetfeldsensors 30 auf einen auszugebenden Drehmomentmesswert des Drehmomentsensors 100 aus der Vielzahl der Datenpaare; und Speichern von Kalibrierungsdaten für die funktionale Abbildung. Das erfindungsgemäße Verfahren ist dadurch gekennzeichnet, dass vor dem Erfassen der Vielzahl von Datenpaaren der folgende Schritt durchgeführt wird: Anlegen eines über das Nenndrehmoment hinausgehenden Drehmoments an die Welle 10, sowohl in eine erste Drehmomentrichtung als auch in eine zweite Drehmomentrichtung, wobei die zweite Drehmomentrichtung entgegengesetzt zur ersten Drehmomentrichtung ist.

In Fig. 1 sind entgegengesetzte Drehrichtungen aufgrund von entgegengesetzten Drehmomenten als Pfeile um die Wellenachse dargestellt. Die Vektoren der Drehmomente selbst verlaufen in entgegengesetzten axialen Richtungen.

Die Vielzahl der Datenpaare wird dabei beispielsweise nur in der ersten Drehmomentrichtung erfasst. Die Vielzahl der Datenpaare umfasst vorzugsweise nur Datenpaare, bei denen das vorbestimmte angelegte Drehmoment in einem Bereich bis zu dem Nenndrehmoment liegt. Alternativ dazu kann jedoch die Vielzahl der Datenpaare jedoch auch wenigstens ein Datenpaar umfassen, bei dem das vorbestimmte angelegte Drehmoment in einem Bereich über dem Nenndrehmoment liegt. Es ist ein weiterer Schritt des Speicherns der Kalibrierungsdaten in einem Speicher der Auswerteeinheit vorgesehen. Die funktionale Abbildung ist eine lineare Abbildung des Signals des Magnetfeldsensors auf den auszugebenden Drehmomentmesswert des Drehmomentsensors sein, wobei die lineare Abbildung sich als eine Regressionsgerade durch die Vielzahl der Datenpaare ergibt.

### Vergleichsversuche

### Ergebnis ohne gezielte Vorbelastung:

Ergebnisse aus Versuchen, welche das Verhalten von Steigung und Offset untersuchen, zeigen bei einem Überlastdrehmoment von 190% des Nenndrehmoments eine Abweichung der Steigung von der hinterlegten Steigung von mehr als 0,8% vom Ausgangswert. Beim Offset entsteht eine Abweichung von über 50% bezogen auf den Ausgangswert (ohne Überlastdrehmoment innerhalb des Nenndrehmoments). Getestet wurde ein gängiger magnetoelastischer Sensor nach dem Stand der Technik mit einem Nenndrehmoment von 50Nm. Dieser wurde mit einem darüberhinausgehenden Drehmoment von 45Nm über dem Nennwert belastet (also insgesamt 190% des Nenndrehmoments), woraus sich eine Änderung des vorab ermittelten funktionalen Zusammenhangs innerhalb des Nenndrehmoments ergab. Die Steigung ist bei diesen Vergleichsmessungen das Verhältnis aus Änderung des gemessenen Drehmoments (also des mit Hilfe der oben genannten linearen funktionalen Abbildung ermittelten Messwerts des Drehmoments) und der Änderung des tatsächlich an der Welle anliegenden Drehmoments. Der Offset ist dabei derjenige mit Hilfe der linearen funktionalen Abbildung ermittelte Wert des Drehmoments bei einem tatsächlich an der Welle anliegenden Drehmoment von Null. Bei der Kalibrierung wird dieser Offset einem Messwert des Drehmoments von Null zugeordnet.

### Ergebnis mit gezielter Vorbelastung:

Bei einer Vorbelastung eines Sensors mit einem Nenndrehmoment von 45Nm in beide Richtungen mit 250Nm (also eine beidseitige Vorbelastung des Sensors von 550% des Nenndrehmoments bzw. 450% über dem Nenndrehmoment) ergaben die Messungen bei einer Belastung von 200Nm (440% Überlastdrehmoment) eine Abweichung der Steigung von weniger als 0,002%.

Die dargestellten Ausführungsformen sind lediglich beispielhaft und der vollständige Umfang der vorliegenden Erfindung wird durch die Ansprüche definiert.

## Patentansprüche

1. Magnetostriktiver Drehmomentsensor (100), umfassend:
eine Welle (10) mit einem magnetisierten Bereich (20);
einen Magnetfeldsensor (30) zur Messung eines durch den magnetisierten Bereich erzeugten Magnetfelds außerhalb der Welle; und
eine Auswerteeinheit (40) zur Ermittlung eines Messwerts eines an der Welle anliegenden Drehmoments aufgrund eines Signals des Magnetfeldsensors, wobei die Auswerteeinheit einen Speicher (45) zur Speicherung von vorbestimmten Kalibrierungsdaten für eine funktionale Abbildung des Signals des Magnetfeldsensors auf den ermittelten Messwert des Drehmoments umfasst;
**dadurch gekennzeichnet, dass**
die vorbestimmten Kalibrierungsdaten sowohl bis zu einem vorbestimmten Nenndrehmoment des Drehmomentsensors (100) als auch in einem Bereich über das Nenndrehmoment hinaus zur Ermittlung des Messwerts des an der Welle (10) anliegenden Drehmoments geeignet sind.

2. Magnetostriktiver Drehmomentsensor nach Anspruch 1, wobei die funktionale Abbildung eine lineare Funktion ist.

3. Magnetostriktiver Drehmomentsensor nach Anspruch 2, wobei die lineare Funktion durch zwei vorbestimmte Konstanten definiert ist und diese zwei Konstanten im Speicher gespeichert sind.

4. Magnetostriktiver Drehmomentsensor nach einem der Ansprüche 1 bis 3, wobei eine relative Abweichung des ermittelten Messwerts des anliegenden Drehmoments von dem tatsächlich anliegenden Drehmoment nicht größer als 0,01, vorzugsweise nicht größer als 0,003, höchst vorzugsweise nicht größer als 0,001 ist.

5. Magnetostriktiver Drehmomentsensor nach einem der Ansprüche 1 bis 4, wobei der Bereich über das Nenndrehmoment hinaus bis zum 1,25-fachen, vorzugsweise 1,5-fachen, höchst vorzugsweise bis zum 2-fachen des Nenndrehmoments reicht.

6. Magnetostriktiver Drehmomentsensor nach einem der Ansprüche 1 bis 5, wobei die vorbestimmten Kalibrierungsdaten sowohl für eine vorbestimmte Richtung des anliegenden Drehmoments als auch für eine dazu entgegengesetzte Richtung des anliegenden Drehmoments geeignet sind.

7. Verfahren zum Kalibrieren eines magnetostriktiven Drehmomentsensors, wobei der magnetostriktive Drehmomentsensor zur Messung von Drehmomenten bis zu einem vorbestimmten Nenndrehmoment ausgelegt ist, und wobei der magnetostriktive Drehmomentsensor eine Welle mit einem magnetisierten Bereich, einen Magnetfeldsensor zur Messung eines durch den magnetisierten Bereich erzeugten Magnetfelds außerhalb der Welle und eine Auswerteeinheit zur Ermittlung eines Messwerts eines an der Welle anliegenden Drehmoments aufgrund eines Signals des Magnetfeldsensors umfasst, und wobei das Verfahren die folgenden Schritte umfasst:
Erfassen einer Vielzahl von Datenpaaren aus jeweils einem Signal des Magnetfeldsensors und einem zugehörigen vorbestimmten an der Welle anliegenden Drehmoment;
Bestimmen einer funktionalen Abbildung des Signals des Magnetfeldsensors auf einen auszugebenden Drehmomentmesswert des Drehmomentsensors aus der Vielzahl der Datenpaare; und
Speichern von Kalibrierungsdaten für die funktionale Abbildung;
**dadurch gekennzeichnet, dass**
vor dem Erfassen der Vielzahl von Datenpaaren der folgende Schritt durchgeführt wird:
Anlegen eines über das Nenndrehmoment hinausgehenden Drehmoments an die Welle in eine erste Drehmomentrichtung.

8. Verfahren nach Anspruch 7, wobei das Anlegen eines über das Nenndrehmoment hinausgehenden Drehmoments an die Welle sowohl in der ersten Drehmomentrichtung als auch in eine zweite Drehmomentrichtung erfolgt, wobei die zweite Drehmomentrichtung entgegengesetzt zur ersten Drehmomentrichtung ist.

9. Verfahren nach Anspruch 7 oder 8, wobei die Vielzahl der Datenpaare nur in der ersten Drehmomentrichtung erfasst werden.

10. Verfahren nach einem der Ansprüche 7 bis 9, wobei die Vielzahl der Datenpaare nur Datenpaare umfasst, bei denen das vorbestimmte angelegte Drehmoment in einem Bereich bis zu dem Nenndrehmoment liegt.

11. Verfahren nach einem der Ansprüche 7 bis 9, wobei die Vielzahl der Datenpaare wenigstens ein erstes Datenpaar umfasst, bei dem das vorbestimmte angelegte Drehmoment in einem Bereich bis zu dem Nenndrehmoment liegt, und weiterhin wenigstens ein zweites Datenpaar umfasst, bei dem das vorbestimmte angelegte Drehmoment in einem Bereich über dem Nenndrehmoment liegt.

12. Verfahren nach einem der Ansprüche 7 bis 11, mit dem weiteren Schritt des Speicherns der Kalibrierungsdaten in einem Speicher der Auswerteeinheit.

13. Verfahren nach einem der Ansprüche 7 bis 12, wobei die funktionale Abbildung eine lineare Abbildung des Signals des Magnetfeldsensors auf den auszugebenden Drehmomentmesswert des Drehmomentsensors ist.

14. Verfahren nach einem der Ansprüche 7 bis 13, wobei das Bestimmen der funktionalen Abbildung ein Bestimmen einer Regressionsgeraden durch die Vielzahl der Datenpaare umfasst.

15. Verfahren nach einem der Ansprüche 7 bis 14, wobei das über das Nenndrehmoment hinausgehende Drehmoment in einem Bereich des 1,25-fachen, vorzugsweise des 1,25- bis 1,5-fachen, höchst vorzugsweise des 1,5-bis 2-fachen des Nenndrehmoments liegt.
